# EUROPEAN PATENT APPLICATION

(11) **EP 4 737 361 A1**
(43) Date of publication of application: **06.05.2026**
(21) Application number: 24875906.0
(22) Date of filing: 05.02.2024
(51) Int. Cl.: B65G 47/88

(54) **BLOCKING MECHANISM AND LOGISTICS CONVEYOR LINE**

(30) Priority: 08.10.2023 CN 202311293186
(71) Applicant: Contemporary Amperex Technology Co., Limited, Ningde, Fujian 352100 (CN)
(72) Inventor: WU, Kai, Ningde, Fujian 352100 (CN); WANG, Xun, Ningde, Fujian 352100 (CN); WANG, Qing, Ningde, Fujian 352100 (CN); LIU, Hailong, Ningde, Fujian 352100 (CN)
(74) Representative: Ran, Handong
(86) International application number: PCT/CN2024/076159
(87) International publication number: WO 2025/077076

(57) **Abstract**

A blocking mechanism and a logistics conveyor line. The blocking mechanism (1) comprises a blocking assembly (10) and a trigger member (20). The blocking assembly comprises a transmission member (11), a blocking member (12), and an elastic member (13). The blocking member has a first position for blocking and a second position for unblocking, the transmission member being connected to the blocking member; the elastic member enables the blocking member to remain in the first position; and the trigger member can come into contact with the transmission member in two opposite directions along the transmission member, thus enabling the blocking member to remain in the second position.

## Description

### CROSS-REFERENCE TO RELATED APPLICATION

The present disclosure is based on Chinese Patent Application No. 202311293186.X filed on October 8, 2023 and titled "BLOCKING MECHANISM AND LOGISTICS CONVEYOR LINE", and claims the priority to the Chinese patent application, which is incorporated herein by reference in its entirety.

### TECHNICAL FIELD

New energy batteries are increasingly more widely applied in life and industry. For example, new energy vehicles equipped with batteries have been widely used. In addition, batteries are increasingly applied in the field of energy storage and the like.

The present disclosure relates to the field of logistics, and in particular to a blocking mechanism and a logistics conveyor line.

### BACKGROUND

In the related art, in order to coordinate with the production rhythm, a blocking mechanism is generally provided between the previous and subsequent workstations on the logistics conveyor line for transporting workpieces. When the subsequent workstation is running, the blocking mechanism blocks the workpiece on the previous workstation; and when the subsequent workstation needs to be docked with the previous workstation and stops running, the blocking mechanism allows the workpiece on the previous workstation to be transferred to the subsequent workstation. The current blocking mechanism cannot be applied to operations in which the movement direction of the logistics conveyor line of the subsequent workstation is bidirectional so that the workpiece is transferred between multiple layers of logistics conveyor lines.

### SUMMARY OF THE INVENTION

In view of this, embodiments of the present disclosure are intended to provide a blocking mechanism and a logistics conveyor line that can effectively solve the production rhythm problem in transferring workpieces between multiple layers of logistics conveyor lines.

To achieve the above objective, an embodiment of the present disclosure provides a blocking mechanism, including a blocking assembly and a trigger member. The blocking assembly includes a transmission member, a blocking member, and an elastic member. The blocking member includes a first position for blocking and a second position for unblocking. The transmission member is connected to the blocking member, and the elastic member can place the blocking member in the first position. The trigger member can contact the transmission member in two opposite directions to place the blocking member in the second position. The elastic member stores elastic potential energy under the action of the transmission member, and when the trigger member is disengaged from the transmission member, the elastic member can restore the blocking member from the second position to the first position.

The trigger member can push the transmission member, and the transmission member drives the blocking member to move, so that the blocking member reaches the second position for unblocking. When the trigger member is not in contact with the transmission member, the elastic member returns the blocking member to the first position to resume blocking. The trigger member can contact the transmission member in two opposite directions, so that the workpiece can be transferred between multiple layers of conveyor lines.

In some embodiments, the blocking assembly further includes a base, and the blocking member is rotatably connected to the base. The transmission member includes a push rod, which can move linearly relative to the base. One end of the push rod is connected to the blocking member, and the other end of the push rod can contact the trigger member.

The base serves to support the push rod and the blocking member. The push rod can move linearly relative to the base, and the blocking member is rotatably connected to the base, thereby converting the linear motion of the push rod into rotation of the blocking member, thus realizing the state change of the blocking member between the first position and the second position.

In some embodiments, the base has a through hole, and the push rod passes through the through hole. The push rod is restricted to make linear motion in the axial direction of the through hole.

In some embodiments, the base includes a first base and a second base, one of the first base and the second base has a slide rail, the other of the first base and the second base has a slide groove, and the first base and the second base are slidably mated through the slide rail and the slide groove; the blocking member is rotatably connected to the first base, and the push rod is fixedly connected to the second base.

The slide rail and the slide groove are slidably mated, and the second base can make linear motion relative to the first base, together with the movement of the push rod fixed thereon, so that the push rod makes linear motion. The use of a slide rail and slide groove structure can effectively reduce costs.

In some embodiments, the base includes a base body and a linear bearing. The blocking member is rotatably connected to the base body. The linear bearing is arranged on the base body, the linear bearing has a through hole, and the push rod passes through the through hole.

The linear bearing is a linear motion system with the advantages of low friction and high stability. The push rod passes through the through hole and contacts and rubs against the linear bearing during motion. By reducing the friction loss of the push rod during motion, the service life of the blocking mechanism can be effectively improved.

In some embodiments, the base body includes a base plate and a lug seat. The linear bearing is arranged on the base plate. The lug seat is connected to the base plate, and the lug seat includes a bottom plate and two first lug plates spaced apart on the bottom plate. The blocking member is located between the two first lug plates and rotatably connected to the two first lug plates.

The base body is divided into the base plate and the lug seat, and the two parts can be integrally formed to simplify the installation of the blocking mechanism; and the two parts may alternatively be detachably connected to facilitate processing and maintenance.

In some embodiments, the transmission member further includes a roller, the push rod includes a rod body and a rod seat connected to an end of the rod body, the rod seat includes two second lug plates spaced apart, the roller is located between the two second lug plates and rotatably connected to the two second lug plates, and the roller is used for being in rolling contact with the trigger member.

The roller converts the contact between the trigger member and the transmission member into rolling contact, which can effectively reduce friction loss and motion resistance during contact.

In some embodiments, the elastic member is a compression spring sleeved on the rod body and located between the rod seat and the base. The outline dimension of the rod seat projected along the axial direction of the rod body is greater than the inner diameter of the compression spring to block the compression spring.

The compression spring is sleeved on the rod body and located between the rod seat and the base, which can simplify the installation of the compression spring. It is unnecessary to have the two ends of the compression spring connected to the rod seat and the base. The compression performance of the compression spring can alleviate the vibration and impact of the blocking member during operation, reduce noise, and reduce wear and damage between components, thereby extending the service life of the blocking mechanism.

In some embodiments, the elastic member is a compression spring sleeved on the push rod and located on the side of the base away from the blocking member.

In some embodiments, the elastic member is a tension spring sleeved on the push rod and located on the side of the base close to the blocking member.

In some embodiments, the elastic member is a torsion spring provided at the connection between the blocking member and the base, and two torsion legs of the torsion spring respectively abut against the blocking member and the base.

In some embodiments, the elastic member is a rectangular spring.

The material to make the rectangular spring has a rectangular cross-sectional shape, and has the advantages of being able to withstand high-speed amplitudes, and having good stability and fatigue resistance, and can better adapt to the application scenarios of the blocking mechanism.

In some embodiments, the blocking member includes a rotating portion and a pushing portion, the rotating portion is rotatably connected to the base, the pushing portion has an avoidance groove and an elongated hole, two avoidance grooves are formed on two sides of the pushing portion, and the elongated hole communicates the avoidance grooves on both sides with each other. One end of the push rod is connected to the pushing portion and is movable along the elongated hole.

The elongated hole is provided on the pushing portion, so as to avoid the restriction of the degree of freedom when the linear movement of the push rod is converted into the rotation of the blocking member. Providing an avoidance groove on the pushing portion can reduce the diameter of the push rod, making the structure more compact.

In some embodiments, the blocking member includes a blocking surface and an avoidance surface, the blocking surface faces away from the base, and the avoidance surface is arranged at an angle with the blocking surface, and the angle is less than 90 degrees.

The avoidance surface is provided to reduce the linear travel of the push rod and the trigger height of the trigger member under the same conditions, so that the blocking member can release the blockage.

In some embodiments, the blocking member includes a blocking surface and a limiting surface, the blocking surface faces away from the base, and the limiting surface faces the base. When the blocking member is in the first position, the limiting surface abuts against the base.

When the blocking member is in the first position, the limiting surface can disperse the force applied by the blocked object to the abutment point between the limiting surface and the base by limiting the rotation travel of the blocking member.

In some embodiments, the trigger member includes a guide portion and a trigger portion, two guide portions are respectively located at two ends of the trigger portion, the guide portion has a first guide end and a second guide end, the height of the first guide end is greater than that of the second guide end, the first guide end is connected to the trigger portion, and a smooth transition is formed between the contact surface of the guide portion for contact with the transmission member and the contact surface of the trigger portion for contact with the transmission member.

When the trigger member contacts the transmission member, the guide portion contacts the transmission member first to push the transmission member to move. When the trigger portion contacts the transmission member, the blocking member moves to the vicinity of the second position. When the trigger member is not in contact with the transmission member, the elastic member returns the blocking member to the first position. There is a smooth transition between the contact surface of the guide portion and the contact surface of the trigger portion, thereby improving the stability of the conveyance.

In some embodiments, the contact surface of the guide portion is a plane, and the contact surface of the contact portion is an arc surface.

The present disclosure further provides a logistics conveyor line, including a first conveyor line, a second conveyor line, and any of the aforementioned blocking mechanisms. The first conveyor line is used to convey a workpiece. The second conveyor line is used to convey the workpiece. The blocking assembly is arranged on a stationary component of the first conveyor line or a stationary part of the second conveyor line, and the trigger member is arranged on a moving part of the second conveyor line. Specifically, the blocking member is in the first position to prevent the workpiece from falling. The trigger member can contact the transmission member to place the blocking member in the second position, so that the workpiece can move between the first conveyor line and the second conveyor line.

The blocking mechanism is provided on the first logistics conveyor line and the second logistics conveyor line. The trigger member can be provided on the bidirectionally moving logistics conveyor line to trigger the blocking member to change its position at an appropriate time, thereby effectively solving the production rhythm problem of logistics conveyance.

In some embodiments, the first conveyor line includes multiple layers of horizontal conveyor lines, the blocking assembly is provided on each layer of the horizontal conveyor lines, and the second conveyor line is a vertical elevator. The blocking assembly is provided on the stationary frame of the vertical elevator at the part corresponding to each layer of the horizontal conveyor lines, or the blocking assembly is provided on each layer of the horizontal conveyance.

Due to the provision of the aforementioned blocking assembly, the workpiece on the logistics conveyor line can move or stop at the appropriate time, which can effectively solve the production rhythm problem in transferring the workpiece between the multiple layers of horizontal conveyor lines.

In some embodiments, the first conveyor line includes at least one first horizontal conveyor line, and the second conveyor line includes one second horizontal conveyor line. The blocking assembly is provided on each of the first horizontal conveyor lines, or the blocking assembly is provided on the stationary component of the second horizontal conveyor line corresponding to each of the first horizontal conveyor lines. The trigger member is provided on the moving component on the second horizontal conveyor line.

Due to the provision of the aforementioned blocking assembly, the workpiece on the logistics conveyor line can move or stop at the appropriate time, which can effectively solve the production rhythm problem in transferring the workpiece between multiple horizontal conveyor lines in one layer.

### BRIEF DESCRIPTION OF DRAWINGS

FIG. 1 is a schematic structural view of a first blocking mechanism according to one or more embodiments, where ν₁ and ν₂ represent two opposite movement directions of a trigger member;
FIG. 2 is an exploded view of a blocking mechanism according to one or more embodiments;
FIG. 3 is a schematic structural view of a second blocking mechanism according to one or more embodiments, where ν₁ and ν₂ represent two opposite movement directions of a trigger member;
FIG. 4 is an exploded view of a third blocking mechanism according to one or more embodiments;
FIG. 5 is a schematic structural view of a fourth blocking mechanism according to one or more embodiments, where ν₁ and ν₂ represent two opposite movement directions of a trigger member;
FIG. 6 is a schematic structural view of a blocking member in a blocking mechanism according to one or more embodiments;
FIG. 7 is a schematic structural view of a base body in a fifth blocking mechanism according to one or more embodiments;
FIG. 8 is a schematic structural view of a blocking mechanism in a first position according to one or more embodiments;
FIG. 9 is a schematic structural view of a blocking mechanism in a second position according to one or more embodiments;
FIG. 10 is a schematic view of a blocking mechanism applied to a logistics conveyor line according to one or more embodiments;
FIG. 11 is an enlarged schematic structural view at a part denoted as A in FIG. 10;
FIG. 12 is an enlarged schematic structural view at a part denoted as B in FIG. 10; and
FIG. 13 is a schematic view of a blocking mechanism applied to another logistics conveyor line according to one or more embodiments, where the arrow indicates the movement direction of a second horizontal conveyor line.

### Description of reference numerals

blocking mechanism 1;
blocking assembly 10; trigger member 20; guide portion 21; trigger portion 22;
transmission member 11; push rod 111; rod body 1111; rod seat 1112; second lug plate 11121; roller 112;
blocking member 12; blocking surface 12A; avoidance surface 12B; limiting surface 12C; rotating portion 121; pushing portion 122; avoidance groove 122A; elongated hole 122B;
elastic member 13;
base 14; through hole 14A; base body 141; base plate 1411; lug seat 1412; bottom plate 14121; first lug plate 14122; linear bearing 142; first base 143; second base 144;
horizontal conveyor line 3; first horizontal conveyor line 31; second horizontal conveyor line 32;
vertical elevator 4; loading platform 41; stationary frame 42;
pallet 5;
electrical blocking system 6.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art of the present disclosure. The terms used herein are intended only for the purpose of describing specific embodiments and are not intended to limit the present disclosure. The terms "including" and "having" and any variations thereof in the specification of the present disclosure are intended to cover non-exclusive inclusion.

In the description of the embodiments of the present disclosure, the technical terms "first", "second", and the like are used only to distinguish between different objects, and shall not be understood as indicating or implying relative importance or implicitly specifying the number, particular order, or primary and secondary relation of the technical features indicated. In the description of the embodiments of the present disclosure, "multiple" means two or more, unless otherwise explicitly and specifically defined.

The reference to "an embodiment" herein means that specific features, structures, or characteristics described in combination with the embodiment may be included in at least one embodiment of the present disclosure. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiment described herein can be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, the technical terms "velocity direction", "upper", "lower", or the like indicate orientations or positional relationships based on the orientations or positional relationships shown in the drawings, and are intended only to facilitate and simplify the description of the embodiments of the present disclosure, and rather than to indicate or imply that the apparatus or element referred to must have a particular orientation, or be constructed, operated, or used in a particular orientation, and therefore should not be construed as limitation of the embodiments of the present disclosure.

In the description of the embodiments of the present disclosure, unless otherwise explicitly specified and defined, the technical terms such as "provide", "couple", "connect", and "fix" should be understood in a broad sense. For example, the connection may be a fixed connection, a detachable connection, or an integrated connection; may be a mechanical connection or an electrical connection; or may be a direct connection, an indirect connection through an intermediate medium, an internal communication between two elements, or an interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be a direct contact, or a contact through an intermediate layer, or a contact between two objects in contact with each other that have little or no interaction force, or a contact between two objects in contact with each other that have an interaction force.

At present, new energy batteries are increasingly applied in life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace. With the continuous expansion of the application field of the power batteries, the market demand is also constantly expanding.

In an embodiment of the present disclosure, a battery may be a battery cell. The battery cell refers to a basic unit that can realize mutual conversion of chemical energy and electrical energy, and may be used to make a battery module or a battery pack to provide power to an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium-metal battery, a sodium-metal battery, a lithium-sulfur battery, a magnesium-ion battery, a nickel-hydrogen battery, a nickel-cadmium battery, a lead storage battery, and the like, which is not limited in the embodiments of the present disclosure.

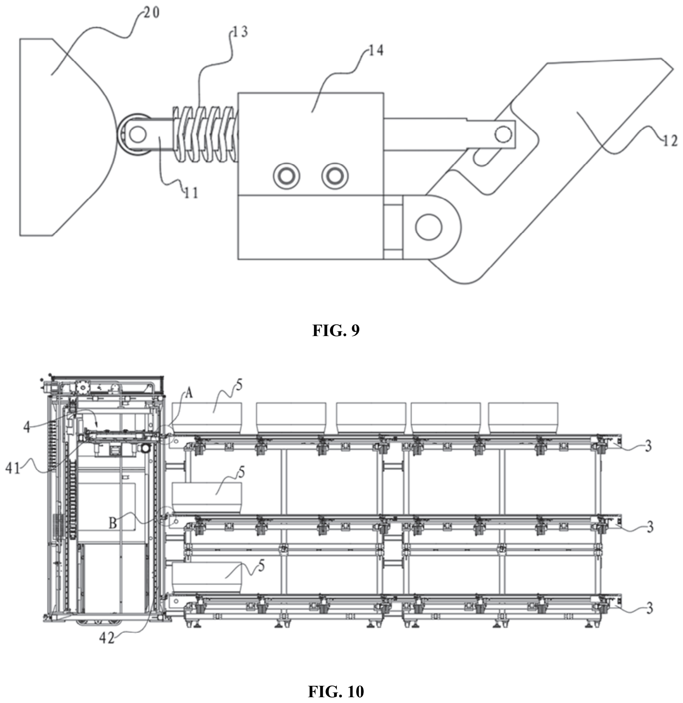

In the battery production process, referring to FIG. 10, a pallet 5 is commonly used to support materials, which are transferred or stored between various processes through a logistics conveyor line. In a particular production scenario, multiple layers of horizontal conveyor lines 3 along the horizontal direction are arranged in the vertical direction. A vertical elevator 4 is a logistics conveyor line in the vertical direction. The vertical elevator 4 can be used to transfer the materials between the multiple layers of horizontal conveyor lines 3. When the vertical elevator 4 is docked with a horizontal conveyor line 3 in a particular layer, the blocking mechanism on the horizontal conveyor line 3 allows the pallet 5 to pass; when the vertical elevator 4 is not docked with the horizontal conveyor line 3, an electrical blocking system 6 is provided on the horizontal conveyor line 3 to block the pallet 5, and a blocking mechanism is also provided to block the pallet 5 when the electrical blocking system 6 fails to prevent it from falling. The vertical elevator 4 can transfer materials upward or downward. Accordingly, the blocking mechanism needs to respond in accordance with the action direction of the vertical elevator 4, that is, in accordance with the production rhythm of the vertical elevator 4.

The "production rhythm" in the embodiments of the present disclosure refers to the time required for each equipment or each process to complete an action cycle during the manufacturing process. The production rhythm of each production line equipment or each process must cooperate with each other so that the workpieces can flow or be processed smoothly. If there is a failure in the equipment or a problem with the processing capability of the process, it may result in dropped products, defective products, or offline semi-finished products.

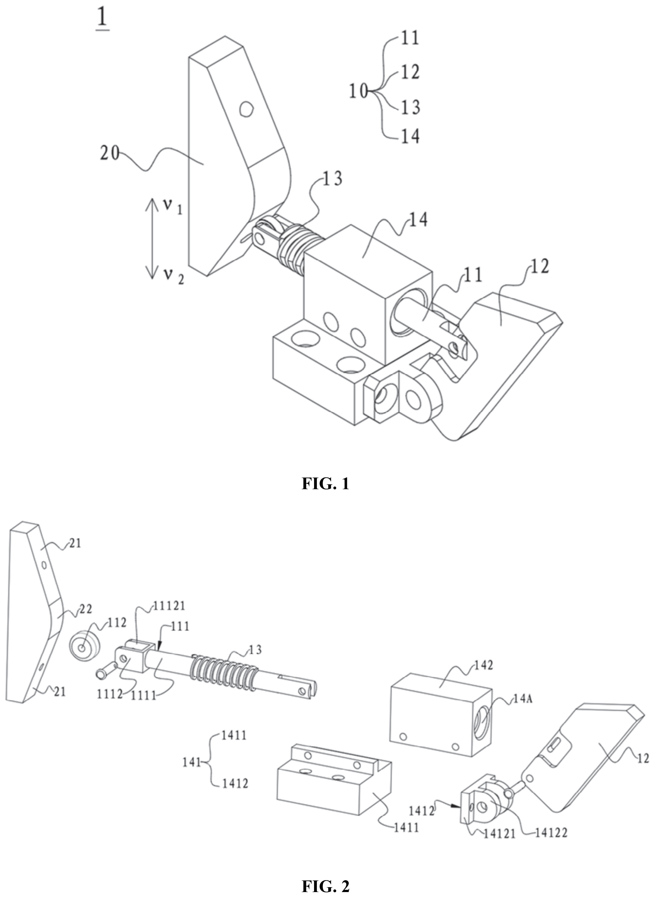

Based on the above considerations, an embodiment of the present disclosure provides a blocking mechanism 1. Referring to FIGS. 1 to 5, the blocking mechanism 1 includes a blocking assembly 10 and a trigger member 20. The blocking assembly 10 includes a transmission member 11, a blocking member 12, and an elastic member 13. The blocking member 12 has a first position for blocking and a second position for unblocking. The trigger member 20 can contact the transmission member 11 in two opposite directions so that the blocking member 12 is in the second position, and the elastic member 13 stores elastic potential energy under the action of the transmission member 11, so that when the trigger member 20 is disengaged from the transmission member 11, the elastic member 13 can restore the blocking member 12 from the second position to the first position.

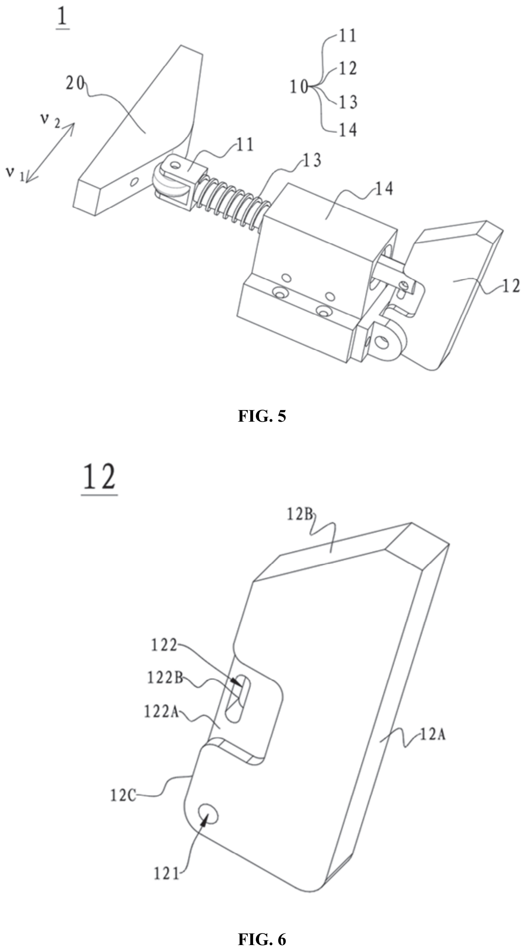

Taking the blocking mechanism 1 in FIGS. 1 and 5 as an example, the movement directions of the trigger member 20 are represented by ν₁ and ν₂, and it can contact the transmission member 11 in two opposite directions, which means that the trigger member 20 can contact the transmission member 11 in two directions, i.e., back and forth, so that the trigger member 20 can contact the transmission member 11 in bidirectional movement. For example, this movement may be left-right movement, front-back movement, or up-down movement. Specifically, in FIG. 1, the trigger member 20 can move upward and downward, and in FIG. 5, the trigger member 20 can move forward and backward.

When the trigger member 20 moves to a specified position, it starts to push the transmission member 11. One end of the transmission member 11 contacts the trigger member 20, and the other end of the transmission member 11 is connected to the blocking member 12. The movement of the transmission member 11 drives the blocking member 12 to move.

The transmission member 11 and the trigger member 20 can be in contact connection, including realizing conveyance by forming a turning pair, a spherical pair, or a sliding pair. The transmission member 11 and the blocking member 12 can be in contact connection, including realizing conveyance by forming a turning pair, a spherical pair, or a sliding pair.

The elastic member 13 may be an elastic block or a spring, and the spring includes a tension spring, a compression spring, or a torsion spring. The elastic member 13 stores elastic potential energy, thereby providing itself with a driving force capable of causing the transmission member 11 or the blocking member 12 to move in the opposite direction.

The trigger member 20 pushes the transmission member 11, and the transmission member 11 drives the blocking member 12 to move, so that the blocking member 12 can reach the second position for unblocking. When the trigger member 20 is no longer in contact with the transmission member 11, the elastic member 13 returns the blocking member 12 to the first position to resume blocking. The trigger member 20 can contact the transmission member 11 in two opposite directions, so that the workpiece such as the pallet 5 can be transferred between multiple layers of conveyor lines.

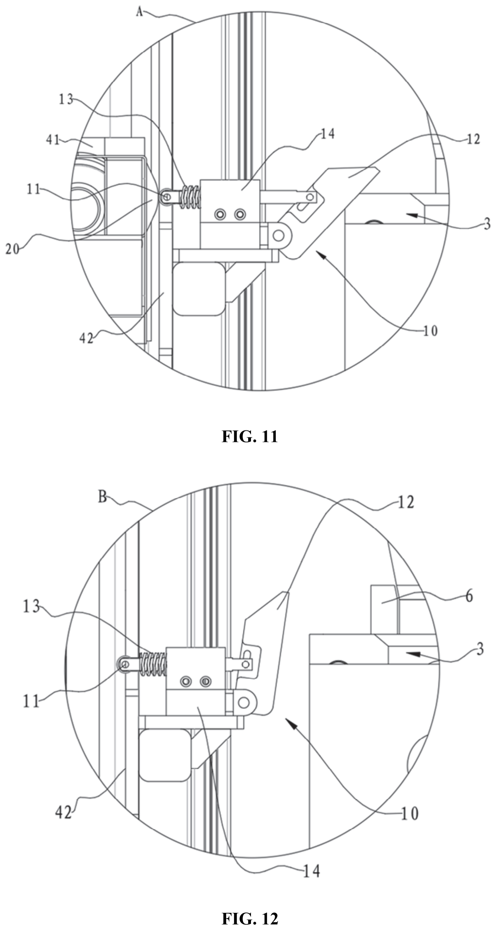

In some embodiments, referring to FIGS. 10 to 12, the trigger member 20 is provided on the loading platform 41 of the vertical elevator 4, and the blocking assembly 10 is provided on the frame of the horizontal conveyor line 3 or on the stationary frame 42 of the vertical elevator 4, where the loading platform 41 can move up and down in the stationary frame 42. When the loading platform 41 of the vertical elevator 4 is docked with the horizontal conveyor line 3 from top to bottom or from bottom to top, the trigger member 20 reaches the specified position, and the trigger member 20 applies a force to the transmission member 11. The transmission member 11 pushes the blocking mechanism 1 to the second position for unblocking. The elastic member 13 stores elastic potential energy under the force of the transmission member 11. When the loading platform 41 of the vertical elevator 4 is not docked with the horizontal conveyor line 3, that is, when the trigger member 20 is disengaged from the transmission member 11, the elastic potential energy of the elastic member 13 causes the blocking member 12 to return to the first position, and the blocking mechanism 1 establishes blockage.

The blocking mechanism 1 of the embodiment of the present disclosure can be applied to a particular scenario in the battery production process, but it should not be understood that the application of the blocking mechanism 1 is limited thereto. The blocking mechanism 1 will be further described below by taking its application in a battery production process as an example.

In some embodiments, referring to FIGS. 1 to 3, the blocking assembly 10 further includes a base 14, and the blocking member 12 is rotatably connected to the base 14. The transmission member 11 includes a push rod 111. The push rod 111 can move linearly relative to the base 14. One end of the push rod 111 is connected to the blocking member 12, and the other end of the push rod 111 can contact the trigger member 20.

The base 14 functions to support the push rod 111 and the blocking member 12. The push rod 111 can move linearly relative to the base 14, and the blocking member 12 is rotatably connected to the base 14, so that the linear motion of the push rod 111 is converted into the rotation of the blocking member 12, thereby realizing the state change of the blocking member 12 between the first position and the second position.

In some embodiments, referring to FIG. 2, the base 14 has a through hole 14A, and the push rod 111 passes through the through hole 14A. The through hole 14A restricts the push rod 111, and the push rod 111 can make linear motion.

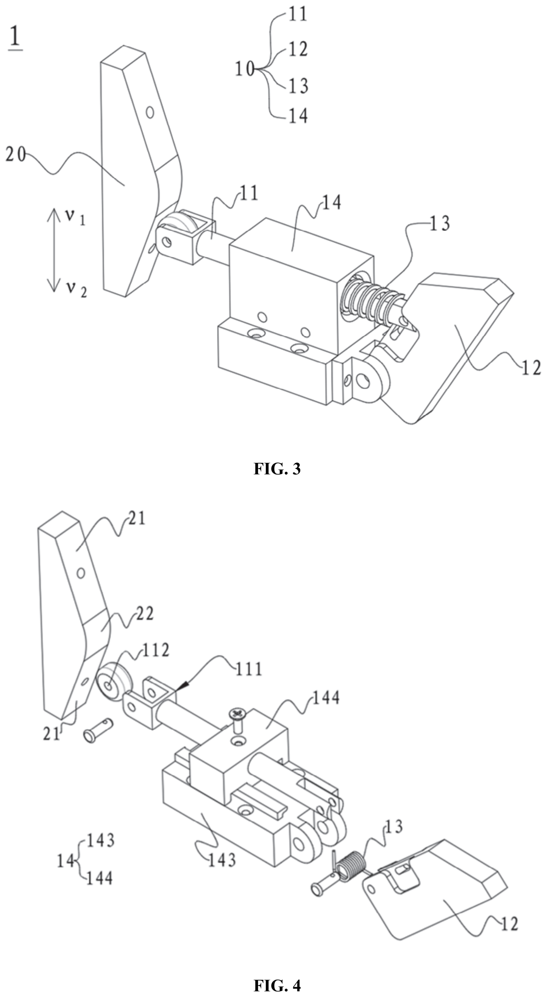

In some embodiments, referring to FIG. 4, the base 14 includes a first base 143 and a second base 144, one of the first base 143 and the second base 144 has a slide rail, and the other of the first base 143 and the second base 144 has a slide groove, and the first base 143 and the second base 144 are slidably mated through the slide rail and the slide groove. The blocking member 12 is rotatably connected to the first base 143, and the push rod 111 is fixedly connected to the second base 144. For example, the push rod 111 and the second base 144 may be integrally formed or connected via a fastener.

The slide rail and the slide groove are slidably mated. For example, the first base 143 has a slide groove, and the second base 144 has a slide rail. The second base 144 can make linear motion relative to the first base 143 and move together with the push rod 111 fixed thereon, so that the push rod 111 makes linear motion. The use of a slide rail and slide groove structure can effectively reduce production or maintenance costs.

In some embodiments, referring to FIG. 2, the base 14 includes a base body 141 and a linear bearing 142, and the blocking member 12 is rotatably connected to the base body 141. The linear bearing 142 is arranged on the base body 141 and has a through hole 14A. The push rod 111 passes through the through hole 14A.

The linear bearing 142 is a bearing and a linear motion system used for linear travel. It is used in conjunction with a cylindrical shaft such as the push rod 111 and has the advantages of low friction and high stability. The push rod 111 passes through the through hole 14A of the linear bearing 142, and the linear bearing 142 is arranged on the base body 141. When the push rod 111 moves under the force of the trigger member 20, friction loss is reduced by the linear bearing 142, so that the blocking mechanism 1 has improved service life and stability during operation. The linear bearing 142 of an appropriate specification and model can be selected based on the force-calculation-based type selection of the push rod 111.

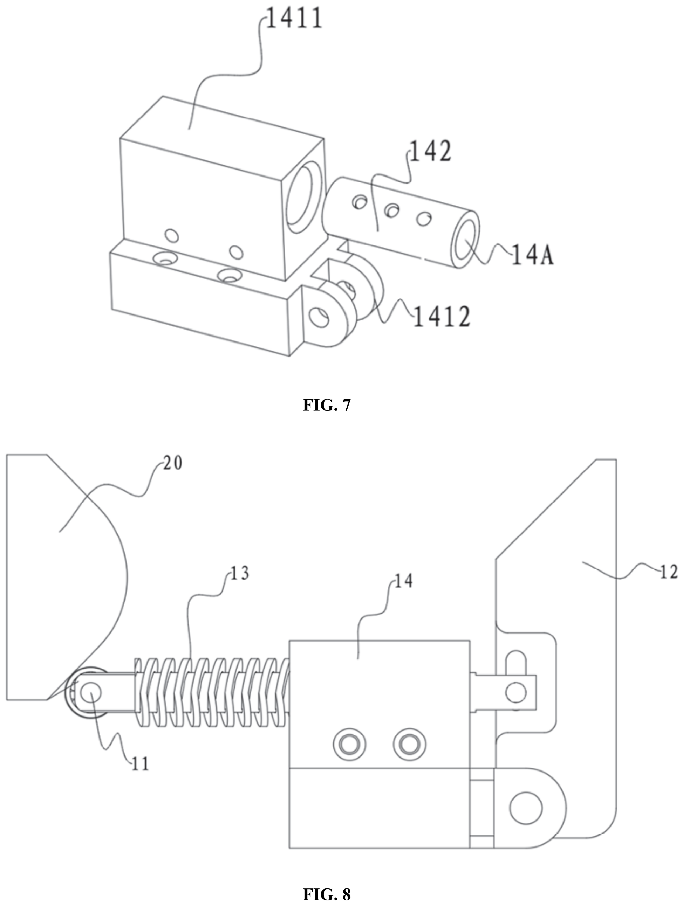

In some specific embodiments, referring to FIG. 2, the linear bearing 142 has a square cylindrical shell and is arranged on the base body 141 through snap fitting or threaded connection. In some other specific embodiments, referring to FIG. 7, the linear bearing 142 is cylindrical, and the base body 141 has a mounting hole. The linear bearing 142 is mated with and connected to the base body 141 through the mounting hole.

In some embodiments, referring to FIG. 2, the base body 141 includes a base plate 1411 and a lug seat 1412. The linear bearing 1411 is arranged on the base plate 1411. The lug seat 1412 is connected to the base plate 1411, and the lug seat 1412 includes a bottom plate 14121 and two first lug plates 14122 spaced apart on the bottom plate 14121. The blocking member 12 is located between the two first lug plates 14122 and rotatably connected to the two first lug plates 14122. For example, the two first lug plates 14122 and the blocking member 12 are connected by a pin shaft.

For installation and maintenance considerations, the base body 141 can be divided into two parts: a detachable base plate 1411 and a lug seat 1412. For example, a gasket is provided between the base plate 1411 and the lug seat 1222 to adjust the rotation range of the blocking member 12. The blocking member 12 is sandwiched by the two first lug plates 14122, and the blocking member 12 is rotatably connected to the two first lug plates 14122. Refer to FIG. 7. Given the processing conditions, the base plate 1411 and the lug seat 1412 may alternatively be integrally formed.

In some embodiments, referring to FIG. 2, the transmission member 11 further includes a roller 112, the push rod 111 includes a rod body 1111 and a rod seat 1112 connected to one end of the rod body 1111, the rod seat 1112 includes two second lug plates 11121 that are spaced apart, the roller 112 is located between the two second lug plates 11121 and rotatably connected to the two second lug plates 11121, and the roller 112 is used for being in rolling contact with the trigger member 20. For example, the two second lug plates 11121 and the roller 112 are connected via a pin shaft.

Rolling friction can effectively reduce the friction loss of materials and reduce frictional resistance. In some application scenarios, the production rhythm may reach tens of thousands of times per day, and the roller 112 may be made of metal or alloy to extend the service life of the trigger member 20 and the transmission member 11.

In some specific embodiments, referring to FIG. 2, the elastic member 13 is a compression spring sleeved on the push rod 111 and located on the side of the base 14 away from the blocking member 12. For example, the compression spring is sleeved on the rod body 1111 and located between the rod seat 1112 and the base 14. The outline dimension of the rod seat 1112 projected along the axial direction of the rod body 1111 is greater than the inner diameter of the compression spring to block the compression spring.

The compression spring is sleeved on the rod body 1111 and located between the rod seat 1112 and the base 14, which can simplify the installation of the compression spring. It is unnecessary to have the two ends of the compression spring connected to the rod seat 1112 and the base 14. The compression performance of the spring can alleviate the vibration and impact of the blocking member 12 during operation, reduce noise, and reduce wear and damage between components, thereby extending the service life of the blocking mechanism 1.

The implementations of the elastic member 13 are not limited to the aforementioned embodiment. For example, referring to FIG. 3, the elastic member 13 may be a tension spring sleeved on the push rod 111 and located on the side of the base 14 close to the blocking member 12. For example, the tension spring is sleeved on the rod body 1111 and located between the blocking member 12 and the base 14. The two ends of the tension spring may be connected to the blocking member 12 and the base 14 respectively. When a linear bearing 142 is provided on the base 14, the two ends of the tension spring may be connected to the blocking member 12 and the linear bearing 142 respectively. When the transmission member 11 contacts the trigger member 20, the push rod 111 moves, the tension spring is stretched to store elastic potential energy, and the blocking member 12 rotates toward the second position. When the transmission member 11 is not in contact with the trigger member 20, the elastic force of the tension spring causes the push rod 111 to move in the opposite direction, and the blocking member 12 returns to the first position.

Referring to FIG. 4, the elastic member 13 may alternatively be a torsion spring provided at the connection between the blocking member 12 and the base 14, for example, sleeved on a pin shaft. The two torsion legs of the torsion spring respectively abut against the blocking member 12 and the base 14. When the blocking member 12 rotates, the torsion spring is twisted to store elastic potential energy, providing an elastic force that can return the blocking member 12 to the first position.

In some embodiments, the elastic member 13 is a rectangular spring.

The material to make the rectangular spring has a rectangular cross-sectional shape, and has the advantages of being able to withstand high-speed amplitudes, and having good stability and fatigue resistance. Depending on the production rhythm or the pallet quality and transportation speed, a rectangular spring of an appropriate specification and model is selected to meet the actual needs.

In some embodiments, referring to FIGS. 2 and 6, the blocking member 12 includes a rotating portion 121 and a pushing portion 122, the rotating portion 121 is rotatably connected to the base 14, and the pushing portion 122 has an avoidance groove 122A and an elongated hole 122B, two avoidance grooves 122A are formed on two sides of the pushing portion 122, and the elongated hole 122B communicates the avoidance grooves 122A on both sides with each other. One end of the push rod 111 is connected to the pushing portion 122 and is movable along the elongated hole 122B.

The elongated hole 122B is provided on the pushing portion 122, so as to avoid the restriction of the degree of freedom when the linear movement of the push rod 111 is converted into the rotation of the blocking member 12. Providing an avoidance groove 122A on the pushing portion 122 can reduce the diameter of the push rod 111, making the structure more compact.

In some embodiments, referring to FIG. 6, the blocking member 12 includes a blocking surface 12A and an avoidance surface 12B. The blocking surface 12A faces away from the base 14, and the avoidance surface 12B forms an angle with the blocking surface 12A, where the angle is less than 90 degrees.

Providing the avoidance surface 12B on the blocking member 12 can shorten the travel of the transmission member 11, thereby reducing the rotation angle of the blocking member 12, so that the blocking member 12 completely releases the blockage when it is in the second position. When the blocking member 12 is in the first position, the blocking surface 12A can block the pallet 5. When the blocking member 12 is in the second position, the avoidance surface 12B reduces the height of the blocking member 12 extending out of the horizontal conveyor line 3, so that the unblocked pallet 5 can pass smoothly.

In some embodiments, referring to FIGS. 1 and 6, the blocking member 12 includes a blocking surface 12A and a limiting surface 12C. The blocking surface 12A faces away from the base 14, and the limiting surface 12C faces the base 14. When the blocking member 12 is in the first position, the limiting surface 12C abuts against the base 14.

In some application scenarios, when the blocking member 12 is in the first position, when the blocking member 12 is subjected to the force from the pallet 5, the limiting surface 12C can limit the rotation travel of the blocking member 12, and disperse the force to the abutment point between the limiting surface 12C and the base 14, thereby reducing the wear of the transmission member 11.

In some embodiments, referring to FIG. 2, the trigger member 20 includes a guide portion 21 and a trigger portion 22, and two guide portions 21 are respectively located at the two ends of the trigger portion 22, and the guide portion 21 has a first guide end and a second guide end, the height of the first guide end is greater than that of the second guide end, and the first guide end is connected to the trigger portion 22. The lowest height of the trigger portion 22 may be equal to the highest height of the guide portion 21. A smooth transition is formed between the contact surface of the guide portion 21 for contact with the transmission member 11 and the contact surface of the trigger portion 22 for contact with the transmission member 11. Said expressions "higher height" and "lower height" are defined relative to the installation surface of the trigger member 20. The installation surface of the trigger member 20 is used for installing the trigger member 20 on other equipment, for example, on the loading platform 41 of the vertical elevator 4.

When the trigger member 20 reaches the specified position, the guide portion 21 first contacts the transmission member 11, and the trigger member 20 starts to push the transmission member 11. As the trigger member 20 moves, the trigger portion 22 smoothly switches to contact with the transmission member 11. At this time, the transmission member 11 moves to the vicinity of the limit position, and the blocking member 12 rotates to the vicinity of the second position. In some application scenarios, the height difference between the two ends of the guide portion 21 can be adjusted according to the inclination angle of the avoidance surface 12B to control the travel of the transmission member 11.

In some embodiments, referring to FIG. 2, the contact surface of the guide portion 21 is a plane, and the contact surface of the trigger portion 22 is a convex arc surface. The convex arc surface of the trigger portion 22 may be tangent to the plane of the guide portion 21 to improve the smoothness of conveyance. The contact surface of the trigger portion 22 may also be a plane, forming a smooth transition with the contact surface of the guide portion 21, so as to increase the tolerance of the blocking mechanism 1 to conveyance errors.

On the other hand, the present disclosure further provides a logistics conveyor line. Referring to FIGS. 10 to 13, the logistics conveyor line includes a first conveyor line, a second conveyor line, and the blocking mechanism 1 in any of the aforementioned embodiments. Both the first conveyor line and the second conveyor line can be used to convey workpieces. Throughout the following description, the pallet 5 is taken as an example of the workpiece, but it is not limited thereto. The first conveyor line is used to convey the pallet 5, the second conveyor line is used to convey the pallet 5, the blocking assembly 10 of the blocking mechanism 1 is arranged on the stationary part of the first conveyor line or the stationary part of the second conveyor line, and the trigger member 20 is arranged on the moving part of the second conveyor line. Specifically, the blocking member 12 is in the first position for blocking to prevent the pallet 5 from falling. The trigger member 20 can contact the transmission member 11 to place the blocking member 12 in the second position for unblocking, so that the pallet 5 can move between the first conveyor line and the second conveyor line.

In some embodiments, referring to FIGS. 10 to 12, the first conveyor line includes multiple layers of horizontal conveyor lines 3, and the second conveyor line is a vertical elevator 4. A blocking assembly 10 is provided on the stationary frame 42 of the vertical elevator 4 at the part corresponding to each layer of horizontal conveyor lines 3. In other embodiments, the blocking assembly 10 may alternatively be provided on each layer of horizontal conveyor lines 3.

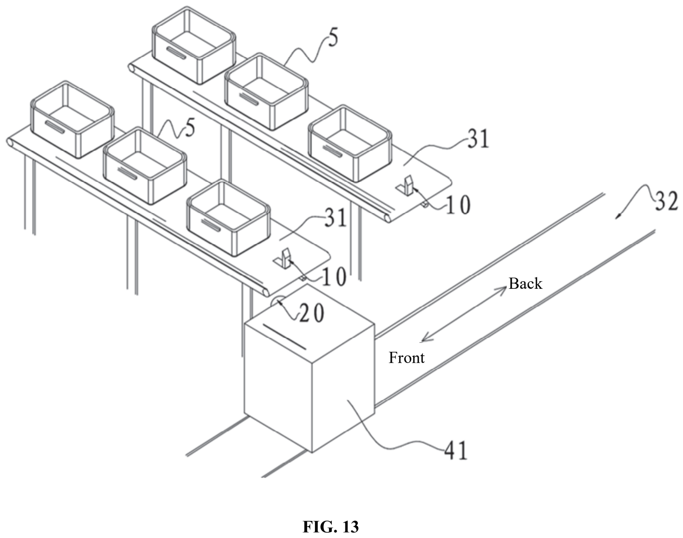

In some embodiments, referring to FIG. 13, the first conveyor line includes at least one first horizontal conveyor line 31, and a blocking assembly 10 is provided on each first horizontal conveyor line 31. The second conveyor line includes one second horizontal conveyor line 32, and the moving components on the second horizontal conveyor line 32 are all provided with a trigger member 20. In other embodiments, the blocking assembly 10 may alternatively be provided on a stationary component of the second horizontal conveyor line 32 corresponding to each first horizontal conveyor line 31.

Due to the provision of the blocking mechanism 1 in any of the aforementioned embodiments, the pallet 5 on the logistics conveyor line moves or stops at the appropriate time, which can effectively solve the production rhythm problem in transferring the pallet 5 between multiple horizontal conveyor lines in a layer and/or between multiple layers of horizontal conveyor lines.

For example, referring to FIG. 10, there are multiple layers of horizontal conveyor lines 3 spaced apart in the vertical direction. The vertical elevator 4 is located at one end of the horizontal conveyor lines 3 and has a moving component for carrying the pallet 5, such as the loading platform 41. In some application scenarios, when the loading platform 41 is docked with the horizontal conveyor line 3 in the third layer, the blocking mechanism 1 releases the blockage, and the pallet 5 on the horizontal conveyor line 3 in the third layer is conveyed to the loading platform 41; when the loading platform 41 is docked with the horizontal conveyor line 3 in the second layer from top to bottom, the blocking mechanism 1 releases the blockage, and the pallet 5 is conveyed from the loading platform 41 to the horizontal conveyor line 3 in the second layer. In some application scenarios, when the loading platform 41 is docked with the horizontal conveyor line 3 in the second layer, the blocking mechanism 1 releases the blockage, and the pallet 5 on the horizontal conveyor line 3 in the second layer is conveyed to the loading platform 41; when the loading platform 41 is docked with the horizontal conveyor line 3 in the third layer from bottom to top, the blocking mechanism 1 releases the blockage, and the pallet 5 is conveyed from the loading platform 41 to the horizontal conveyor line 3 in the third layer. In some application scenarios, the pallet 5 is transferred from the horizontal conveyor line 3 to the loading platform 41 of the vertical elevator 4, and then transferred to other workstations; or alternatively, the pallet 5 is transferred from the loading platform 41 of the vertical elevator 4 to the horizontal conveyor line 3.

For example, referring to FIG. 13, there are multiple first horizontal conveyor lines 31 arranged in the horizontal direction, and the second horizontal conveyor line 32 is arranged perpendicular to the first horizontal conveyor lines 31 and has a moving component for carrying the pallet 5, such as the loading platform 41. In some application scenarios, when the loading platform 41 is docked with the first one of the first horizontal conveyor lines 31, the blocking mechanism 1 releases the blockage, and the pallet 5 on the first one of the first horizontal conveyor lines 31 is conveyed to the loading platform 41; and when the loading platform 41 is docked with the second one of the first horizontal conveyor lines 31 from front to back, the blocking mechanism 1 releases the blockage, and the pallet 5 is conveyed from the loading platform 41 to the second one of the first horizontal conveyor lines 31. In some application scenarios, when the loading platform 41 is docked with the second one of the first horizontal conveyor lines 31, the blocking mechanism 1 releases the blockage, and the pallet 5 on the second one of the first horizontal conveyor lines 31 is conveyed to the loading platform 41; and when the loading platform 41 is docked with the first one of the first horizontal conveyor lines 31 from back to front, the blocking mechanism 1 releases the blockage, and the pallet 5 is conveyed from the loading platform 41 to the first one of the first horizontal conveyor lines 31. In some application scenarios, the pallet 5 is transferred from the first horizontal conveyor line 31 to the loading platform 41 of the second horizontal conveyor line 32, and then transferred to other workstations; or alternatively, the pallet 5 is transferred from the loading platform 41 of the second horizontal conveyor line 32 to the first horizontal conveyor line 3.

It can be understood that the transport direction is not limited to the vertical or horizontal direction in the aforementioned embodiments, and the installation positions of the various components of the blocking mechanism 1 can be adjusted in a timely manner according to production needs.

The aforementioned logistics conveyor line has the uses including the circulation of semi-finished products in production line processes, the distribution of products from parts workshops to assembly workshops, and the storage in warehouses or release of finished products. Refer to FIG. 10. In some application scenarios, a blocking assembly 10 is provided at the end of the stationary frame 42 of the vertical elevator 4 corresponding to each layer of horizontal conveyor lines 3, and an electrical blocking system 6 is provided upstream of the blocking assembly 10 corresponding to each layer of horizontal conveyor lines 3. The electrical blocking system 6 may include a light sensor, a lifting cylinder, and a control computer. The control computer adjusts various system parameters. When the light sensor recognizes that the pallet 5 is approaching and the vertical elevator is not in place, the lifting cylinder is activated to block the pallet 5 until the vertical elevator 4 is in place. The electrical blocking system 6 may be unstable due to the service life of the lifting cylinder or changes in the sensitivity of the light sensor, and may not be able to block the pallet 5 in time. The blocking mechanism 1 provided in the present disclosure serves as another line of defense, which can serve to prevent the pallet 5 from falling from the logistics conveyor line, thereby enhancing the stability of the logistics conveyor line during operation and providing a guarantee for operational safety.

In some application scenarios, the blocking mechanism 1 is in direct contact with the pallet 5 and is the first line of defense for blocking the pallet 5. The blocking member 12 is in highfrequency contact with the pallet 5, and the material properties or dimensional relationship of the blocking mechanism 1 can be changed according to actual production situations to improve the durability and stability.

The aforementioned embodiments are only used to illustrate rather than to limit the technical solutions of the present disclosure. Although the present disclosure is described in detail with reference to the aforementioned embodiments, those of ordinary skill in the art should understand that the technical solutions recorded in the aforementioned embodiments still can be modified, or some or all of the technical features thereof can be replaced equivalently. These modifications or replacements do not make the essence of the corresponding technical solution depart from the scope of the technical solutions of various embodiments of the present disclosure, and shall fall within the scope of the specification of the present disclosure. In particular, the technical features mentioned in the various embodiments can be combined in any manner as long as there is no structural conflict. The present disclosure is not limited to the specific embodiments disclosed herein.

### Industrial applicability

The present disclosure provides a blocking mechanism and a logistics conveyor line. The blocking mechanism includes a blocking assembly and a trigger member. The blocking member includes a transmission member, a blocking member, and an elastic member. The blocking member includes a first position for blocking and a second position for unblocking. The transmission member is connected to the blocking member, and the elastic member can place the blocking member in the first position; and the trigger member can contact the transmission member along two opposite directions of the transmission member to place the blocking member in the second position. The blocking mechanism can be arranged on multiple layers of logistics conveyor lines to effectively solve the production rhythm problem of logistics transmission.

## Claims

1. A blocking mechanism, comprising:
a blocking assembly comprising a transmission member, a blocking member, and an elastic member, the blocking member comprising a first position for blocking and a second position for unblocking, the transmission member being connected to the blocking member, and the elastic member being capable of placing the blocking member in the first position; and
a trigger member capable of contacting the transmission member in two opposite directions to cause the transmission member to push the blocking member into the second position.

2. The blocking mechanism according to claim 1, wherein:
the blocking assembly further comprises a base, wherein the blocking member is rotatably connected to the base; and
the transmission member comprises a push rod movable linearly relative to the base, wherein one end of the push rod is connected to the blocking member, and the other end of the push rod is capable of contacting the trigger member.

3. The blocking mechanism according to claim 2, wherein the base comprises:
a base body, the blocking member being rotatably connected to the base body; and
a linear bearing arranged on the base body and having a through hole, the push rod passing through the through hole.

4. The blocking mechanism according to claim 3, wherein the base body comprises:
a base plate, the linear bearing being arranged on the base plate; and
a lug seat connected to the base plate and comprising a bottom plate and two first lug plates spaced apart on the bottom plate, the blocking member being located between the two first lug plates and rotatably connected to the two first lug plates.

5. The blocking mechanism according to any one of claims 2 to 4, wherein the transmission member further comprises a roller, and the push rod comprises a rod body and a rod seat connected to an end of the rod body, wherein:
the rod seat comprises two second lug plates spaced apart; and
the roller is located between the two second lug plates and rotatably connected to the two second lug plates, and the roller is used for being in rolling contact with the trigger member.

6. The blocking mechanism according to claim 5, wherein the elastic member is a compression spring sleeved on the rod body and located between the rod seat and the base, and an outline dimension of the rod seat projected along the axial direction of the rod body is greater than an inner diameter of the compression spring to block the compression spring.

7. The blocking mechanism according to any one of claims 2 to 4, wherein:
the elastic member is a compression spring sleeved on the push rod and located on the side of the base away from the blocking member; or
the elastic member is a tension spring sleeved on the push rod and located on the side of the base close to the blocking member; or
the elastic member is a torsion spring provided at the connection between the blocking member and the base, wherein two torsion legs of the torsion spring abut against the blocking member and the base respectively.

8. The blocking mechanism according to any one of claims 2 to 7, wherein the blocking member comprises a rotating portion and a pushing portion, wherein the rotating portion is rotatably connected to the base, and the pushing portion has avoidance grooves and an elongated hole, wherein:
two avoidance grooves are formed on two sides of the pushing portion;
the elongated hole communicates the avoidance grooves on both sides with each other; and
one end of the push rod is connected to the pushing portion and movable along the elongated hole.

9. The blocking mechanism according to any one of claims 2 to 8, wherein the blocking member comprises a blocking surface and an avoidance surface, wherein the blocking surface faces away from the base, and the avoidance surface is arranged at an angle with the blocking surface, the angle being less than 90 degrees.

10. The blocking mechanism according to any one of claims 2 to 9, wherein the blocking member comprises a blocking surface and a limiting surface, wherein:
the blocking surface faces away from the base, and the limiting surface faces the base; and
when the blocking member is in the first position, the limiting surface abuts against the base.

11. The blocking mechanism according to any one of claims 2 to 10, wherein:
the base has a through hole, wherein the push rod passes through the through hole; or
the base comprises a first base and a second base, wherein:
one of the first base and the second base has a slide rail, and the other of the first base and the second base has a slide groove;
the first base and the second base are slidably mated through the slide rail and the slide groove; and
the blocking member is rotatably connected to the first base, and the push rod is fixedly connected to the second base.

12. The blocking mechanism according to any one of claims 1 to 11, wherein the trigger member comprises a guide portion and a trigger portion, wherein:
two guide portions are respectively located at two ends of the trigger portion;
the guide portion has a first guide end and a second guide end, wherein a height of the first guide end is greater than that of the second guide end, and the first guide end is connected to the trigger portion; and
a smooth transition is formed between a contact surface of the guide portion for contact with the transmission member and a contact surface of the trigger portion for contact with the transmission member.

13. The blocking mechanism according to claim 12, wherein the contact surface of the guide portion is a plane, and the contact surface of the trigger portion is a convex arc surface.

14. The blocking mechanism according to any one of claims 1 to 11, wherein the elastic member is a rectangular spring.

15. A logistics conveyor line, comprising:
a first conveyor line for conveying a workpiece;
a second conveyor line for conveying the workpiece; and
the blocking mechanism according to any one of claims 1 to 14, wherein the blocking assembly is arranged on a stationary component of the first conveyor line or a stationary component of the second conveyor line, and the trigger member is arranged on a moving component of the second conveyor line,
wherein:
the blocking member is in the first position to prevent the workpiece from falling;
the trigger member is capable of contacting the transmission member to place the blocking member in the second position; and
the workpiece is movable between the first conveyor line and the second conveyor line.

16. The logistics conveyor line according to claim 15, wherein the first conveyor line comprises multiple layers of horizontal conveyor lines, and the second conveyor line is a vertical elevator,
wherein the blocking assembly is provided on a stationary frame of the vertical elevator at a part corresponding to each layer of horizontal conveyor lines, or the blocking assembly is provided on each layer of the horizontal conveyor lines.

17. The logistics conveyor line according to claim 15, wherein the first conveyor line comprises at least one first horizontal conveyor line, and the second conveyor line comprises one second horizontal conveyor line, wherein:
the blocking assembly is provided on each of the first horizontal conveyor lines, or the blocking assembly is provided on a stationary component of the second horizontal conveyor line corresponding to each of the first horizontal conveyor lines; and
the trigger member is provided on each of the moving components of the second horizontal conveyor line.
